# EUROPÄISCHE PATENTANMELDUNG

(11) **EP 0 303 802 A1**
(43) Veröffentlichungstag der Anmeldung: **22.02.1989**
(21) Anmeldenummer: 88110290.9
(22) Anmeldetag: 28.06.1988
(51) Int. Cl.: C07F 7/08, A01N 55/00

(54) **Neue Thienyl-azolylmethyl-silane**

(30) Priorität: 14.07.1987 DE 3723246
(71) Anmelder: AGROLINZ AGRARCHEMIKALIEN GESELLSCHAFT M.B.H., A-4021 Linz (AT)
(72) Erfinder: Aukenthaler, August Dr., I-39040 Gossensass (IT); Saischek, Gerald Dipl.-Ing., A-4600 Wels (AT); Edlmayer, Franz, A-4020 Linz (AT); Reiter, Klaus, A-4020 Linz (AT); Kores, Dietmar Dr., A-4060 Leonding (AT); Graf, Josef, A-4442 Kleinraming (AT); Tramberger, Hermann, A-3353 Seitenstetten (AT)
(74) Vertreter: Kunz, Ekkehard, Dr.

(57) **Zusammenfassung**

Neue Thienyl-azolylmethyl-silane der allgemeinen Formel I 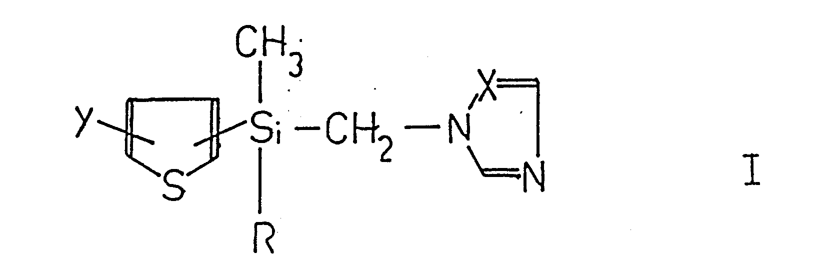 in der X ein Stickstoffatom oder eine CH-Gruppe, Y ein Wasserstoff- oder Halogenatom und R einen geradkettigen oder verzweigten Alkylrest mit 1 bis 6 C-Atomen, einen unsubstituierten, ein- oder mehrfach durch Halogen substituierten Phenyl- oder Thienylrest, einen Biphenylyl- oder Naphthylrest bedeutet sowie deren pflanzenphysiologisch verträglichen Säureadditionssalze, Verfahren zur Herstellung dieser neuen Verbindungen und ihre Verwendung als fungizide Mittel.

## Beschreibung

Die Erfindung betrifft neue Thienyl-azolylmethyl-silane, ein Verfahren zu ihrer Herstellung sowie diese enthaltende fungizide Mittel, Verfahren zu deren Herstellung und deren Verwendung.

In US-PS 3,692.798 sind Alkyl-, Alkylphenyl- oder Phenylsilylmethylimidazole mit antimykotischen Eigenschaften geoffenbart. US-PS 4,510.136 beschreibt Alkyl-, Alkylphenyl- oder Phenylsilylalkyltriazole, deren Phenylreste vielfach substituiert sein können mit fungiziden Eigenschaften. Aus EP-A 148.026 sind fungizide Silylmethylimidazole und -triazole, die ungesättigte Alkylgruppen enthalten, bekannt. Das Bauprinzip der Thienyl-azolylmethyl-silan-Verbindungen ist jedoch nirgendwo genannt. Unerwarteterweise wurden nun neue Thienyl-azolylmethyl-silane gefunden, die sich durch eine starke fungizide Wirkung auszeichnen.

Gegenstand der Erfindung sind daher neue Thienyl-azolylmethyl-silane der allgemeinen Formel I des Formelblattes in der X ein Stickstoffatom oder eine CH-Gruppe, Y ein Wasserstoff- oder Halogenatom und R einen geradkettigen oder verzweigten Alkylrest mit 1 bis 6 C-Atomen, einen unsubstituierten, ein- oder mehrfach durch Halogen substituierten Phenyl- oder Thienylrest, einen Biphenylyl- oder Naphthylrest bedeutet sowie deren pflanzenphysiologisch verträglichen Säureadditionssalze.

In der Formel I bedeutet R einen geradkettigen oder verzweigten Alkylrest mit 1 bis 6 C-Atomen, einen unsubstituierten oder ein- oder mehrfach durch Halogen substituierten Phenyl- oder Thienylrest oder einen Biphenylyl- oder Naphthylrest, wobei der Biphenylyl- und der durch Halogen substituierte Phenylrest bevorzugt sind;
X bedeutet ein Stickstoffatom oder eine CH-Gruppe, bevorzugt ein Stickstoffatom und
Y ein Wasserstoff- oder Halogenatom, bevorzugt ein Wasserstoffatom.

Der Thienylrest kann in 2- oder 3-Stellung an das Silizium gebunden sein, wobei er gegebenenfalls durch Halogen substituiert sein kann. Halogen bedeutet Fluor, Chlor oder Brom. Bevorzugt ist der Thienylrest in 2-Stellung an das Silizium gebunden.

Unter dem Begriff Alkyl sind je nach der Anzahl der angegebenen Kohlenstoffatome beispielsweise eine der folgenden Gruppen zu verstehen: Methyl, Ethyl, Propyl, Butyl, Pentyl, Hexyl, Heptyl, Octyl, usw. sowie ihre Isomeren, wie z. B. Isobutyl, tert. Butyl, sek. Butyl, Isopentyl usw.

Die neuen Verbindungen können auch in Form ihrer Säureadditionssalze vorliegen. Als Säureadditionssalze kommen alle pflanzenphysiologisch verträglichen Salze anorganischer oder organischer Säuren in Frage, beispielsweise Hydrochloride, Nitrate und Oxalate. Ebenso können die neuen Verbindungen als Metallkomplexe vorliegen.

Ein weiterer Gegenstand der Erfindung ist ein Verfahren zur Herstellung der neuen Thienyl-azolylmethyl-silane der allgemeinen Formel I des Formelblattes in der X ein Stickstoffatom oder eine CH-Gruppe, Y ein Wasserstoff- oder ein Halogenatom und R einen geradkettigen oder verzweigten Alkylrest mit 1 bis 6 C-Atomen, einen unsubstituierten, ein- oder mehrfach durch Halogen substituierten Phenyl- oder Thienylrest, einen Biphenylyl- oder Naphthylrest bedeutet, dadurch gekennzeichnet, daß man
a) eine Verbindung der allgemeinen Formel II des Formelblattes, in der R die oben angegebenen Bedeutung hat, mit einer Verbindung der allgemeinen Formel III des Formelblattes, in der Y die obgenannte Bedeutung hat und M Li, Na oder MgBr bedeutet, reagieren läßt und
b) das gebildete Reaktionsprodukt der allgemeinen Formel IV des Formelblattes mit einem Alkalisalz von Imidazol oder Triazol unter Abspaltung des entsprechenden Alkalichlorids zu einer Verbindung der allgemeinen Formel I umsetzt.

Die Ausgangsverbindung der allgemeinen Formel 11, in der R eine Methylgruppe bedeutet, ist ein Handelsprodukt. Wenn R andere Reste bedeutet, können diese durch Reaktion von Chlormethyl-dichlormethylsilan, ebenfalls ein Handelsprodukt, nach D. Häbich, F.Effenberger, Synthesis, 1979, 841-871 bzw. C.Eaborn, J.C. Jeffrey, J. chem. Soc. 4266 - 4268, 1954, eingeführt werden, wobei die entstehenden Verbindungen der allgemeinen Formel 11, ohne isoliert werden zu müssen, in den Reaktionsschritt a) eingesetzt werden können.

Der Umsatz der Verbindung der allgemeinen Formel 11 des Formelblattes mit einem reaktiven Thiophen der Formel III erfolgt, gegebenenfalls ohne die Verbindung der allgemeinen Formel 11 gesondert isoliert zu haben, in Gegenwart eines Lösungs- oder Verdünnungsmittels bei tiefen Temperaturen von etwa -80 bis 0 ° C, insbesonders bei Temperaturen von -75 bis -60 ° C. Die gebildeten Verbindungen der allgemeinen Formel IV sind teilweise neu.

Als Verdünnungsmittel dienen beispielsweise organische Lösungsmittel wie Pentan, Hexan, Benzol, Toluol, Xylol, Diethylether, Diisopropylether, Petrolether, Tetrahydrofuran sowie Kombinationen dieser Verdünnungsmittel, wobei Diethylether und/oder Tetrahydrofuran bevorzugt sind.

Zur Entfernung des entstandenen anorganischen Salzes wird das Reaktionsprodukt durch übliche Extraktionsmethoden aufgearbeitet, wobei man etwa dem Reaktionsgemisch Wasser zusetzt und die organische Phase mehrmals mit Wasser extrahiert. Die organische Phase wird getrocknet und das Lösungsmittel entfernt. Der Rückstand kann durch Destillation oder Säulenchromatographie gereinigt werden.

Die Umsetzung der Verbindungen der allgemeinen Formel IV mit einem Alkalisalz von Imidazol oder Triazol erfolgt ebenso üblicherweise in Gegenwart eines Lösungs- oder Verdünnungsmittels bei Temperaturen zwischen etwa 0 bis 200 C, bevorzugt zwischen 20 und 100 C. Als Lösungs- oder Verdünnungsmittel sind polare, organische Lösungsmittel wie z. B. Methanol, Ethanol, Tetrahydrofuran, Dimethylformamid oder Dimethylsulfoxyd geeignet, wobei Dimethylformamid besonders bevorzugt ist.

Die Aufarbeitung erfolgt durch übliche Extraktionsmethoden, indem man etwa dem Reaktionsgemisch ein organisches, mit Wasser nicht mischbares, Lösungmittel wie z. B. Essigsäureethylester, Dichlormethan, Diethylether sowie Wasser zusetzt und die organische Phase mit Wasser wäscht. Nach Entfernen des Lösungsmittels kann die weitere Reinigung der organischen Phase beispielsweise durch Säulenchromatographie erfolgen.

Die Herstellung der Säureadditionssalze, die gegebenenfalls auch einen Reinigungsschritt darstellen kann, kann durch Auflösen der Base einer Verbindung der allgemeinen Formel I in einem Lösungsmittel wie Aceton, Essigsäureethylester oder Diisopropylether und Ausfällen des Säureadditionssalzen durch Säurezugabe erfolgen. Die Reinigung kann zweckmäßig durch Umkristallisieren durchgeführt werden.

Bei allen Umsetzungen setzt man die Ausgangsstoffe üblicherweise in stöchiometrischem Verhältnis ein. Ein Überschuß des einen oder anderen kann in Einzelfällen aber durchaus vorteilhaft sein.

Die erfindungsgemäßen Thienyl-azolylmethyl-silane zeigen ausgezeichnete fungizide Eigenschaften und stellen somit eine Bereicherung der Technik dar. Sie sind gegen eine breites Spektrum von pflanzenpathogenen Pilzen wirksam, z. B. gegen Pilze aus den Klassen der Oomyceten, Ascomyceten, Basidiomyceten und Deuteromyceten.

Die gute Pflanzenverträglichkeit und die systemische Wirkungsweise in den, zur Behandlung von Pflanzenkrankheiten notwendigen, Konzentrationen, erlaubt eine Behandlung von oberirdischen Pflanzenteilen, von Pflanz- und Saatgut.

Als Pflanzen seien beispielsweise Getreidearten wie Weizen, Gerste, Roggen oder Hafer, Wein, Apfel, Gemüsearten wie Gurken und Bohnen, Rüben sowie Zierpflanzen genannt.

Mit besonders gutem Erfolg können die erfindungsgemäßen Mittel beispielsweise zur Bekämpfung folgender Pflanzenkrankheiten eingesetzt werden:
Cercospora beticola (Cercospora-Blattfleckenkrankheit) an Rüben
Cochliobolus sativus (Helminthosporiose) an Getreide
Erysiphe graminis f.spec.tritici (Echter Mehltau) an Weizen
Erysiphe graminis f.spec.hordei (Echter Mehltau) an Gerste
Erysiphe cichoracearum (Echter Mehltau) an Gurken
Plasmopora viticola (Falscher Rebenmehltau) an Wein
Phaeosphaeria nodorum (Braunspelzigkeit, Blattdürre) an Getreide
Puccinia recondita (Braunrost) an Weizen
Puccinia coronata (Kronenrost) an Hafer
Venturia inaequalis (Apfelschorf) an Äpfeln

Die neuen Wirkstoffe können je nach ihrem Anwendungsgebiet mit üblichen Träger- und/oder Wirkstoffen zu gebräuchlichen Formulierungen verarbeitet werden, wie Lösungen, Spritzpulver, Emulsionskonzentrate, Emulsionen, Suspensionen, Pulver, Schäume, Pasten, Granulate, Aerosole, Wirkstoff-imprägnierte Natur-und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.a., sowie ULV-Kalt- und Warmnebel-Formulierungen.

Diese Formulierungen werden in bekannter Weise hergestellt, z. B. durch Vermischen der Wirkstoffe mit Streckmittein, also flüssigen Lösungsmitteln, unter Druck stehenden verflüssigten Gasen und/oder festen Trägerstoffen, gegebenenfalls unter Verwendung von Tensiden, also Emulgatoren und/oder Dispergier- und/oder Netzmitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Cyclohexan oder Paraffine, z. B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten, gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe, sowie Butan, Propan, Stickstoff und Kohlendioxid; als feste Trägerstoffe kommen in Frage: z. B. natürliche Gesteinsmehle, wie Kaoline, Tonerde, Talkum, Kreide, Quarz, Attapulgit, Montmorillonit oder Diatomeenerde und synthetische Produkte, wie hochdisperse Kieselsäure, Aluminiumoxid und Silikate; als feste Trägerstoffe für Granulate kommen in Frage: z. B. gebrochene und fraktionierte natürliche Gesteine, wie Calcit, Marmor, Bims, Sepiolith, Dolomit sowie synthetische Granulate aus organischem Material, wie Sägemehl, Kokosnuss-Schalen, Maiskolben und Tabakstengel; als Emulgiermittel und/oder schaumerzeugende Mittel kommen in Frage: z. B. nichtionogene und ionogene Tenside, wie Polyoxyethylen-Sorbitan-Tallölester, Na-Oleylmethyltaurid, Polyoxyethylen-Fettsäure-Ester, Polyoxyethylen-Fettalkoholether, z. B. Alkylarylpolyglykolether, Alkylsulfonate, Alkylsulfate, Arylsulfate und Arylalkylsulfonate sowie Eiweisshydrolysate; als Dispergiermittel kommen in Frage: z. B. Ligninsulfonate oder Kondensationsprodukte von Arylsulfonaten mit Formaldehyd.

Es können in den Formulierungen Haft- und Verdickungsmittel wie Carboxymethylcellulose, Methylcellulose, natürliche und synthetische pulverige, körnige und latexförmige Polymere verwendet werden, wie Gummi arabicum, Polyvinylalkohol, Polyvinylacetat.

Es können Farbstoffe, wie anorganische Pigmente, z. B. Eisenoxid, Titanoxid, Ferrocyanblau und organische Farbstoffe, wie Alizarin-, Phthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.% Wirkstoff, vorzugsweise zwischen 1 und 20 %.

Die Wirkstoffe können als solche, in Form ihrer Formulierungen oder den daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z. B. durch Gießen, Tauchen, Spritzen, Sprühen, Vernebeln, Verdampfen, Injizieren, Verschlämmen, Stäuben, Streuen, Trockenbeizen, Feuchtbeizen, Nassbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.%, vorzugsweise zwischen 0,5 und 0,001 Gew.%.

Bei der Anwendung der Wirkstoffe zur Behandlung von Pilzinfektionen liegen die Aufwandmengen zwischen 0,015 und 1 kg Wirkstoff/ha Fläche.

Bei der Saatgutbehandlung werden im allgemeinen Wirkstoffmengen von 0,01 bis 5 g je Kilogramm Saatgut, vorzugsweise 0,1 bis 1 g benötigt.

### Beispiel 1:

### (1,1-Biphenyl-4-yl)(2-thienyl)methyl(1,2,4-triazol-1-ylmethyl)silan

### Herstellung der Ausgangssubstanzen:

37,7 g Brombiphenyl (0,16 Mol) wurden in 400 ml Tetrahydrofuran auf -75 C gekühlt. Bei dieser Temperatur wurden 100 ml einer 1,6 molaren Butyllithiumlösung'in Hexan (0,16 Mol) zugetropft. Die entstandene milchige Suspension von Biphenyllithium wurde bei -70 C zu einer Lösung von 25,6 g Dichlor-methyl-chlormethyl-silan (0,16 Mol) in 100 ml Diethylether getropft. Das entstandene Reaktionsprodukt (1,1'-Biphenyl-4-yl)-chlor-methyl-chlormethyl-silan wurde, ohne es zu isolieren, im Reaktionsschritt a) eingesetzt.

13,4 g Thiophen (0,16 Mol) wurden in 100 ml Diethylether bei Raumtemperatur mit 100 ml einer 1,6 molaren Butyllithiumlösung in Hexan (0,16 Mol) versetzt und etwa 15 Minuten auf Rückfluß erhitzt. Die so erhaltenen Suspension wurde als solche im Reaktionsschritt a) eingesetzt.

### a) (1,1-Biphenyl-4-yl)(2-thienyl)methyl-chlormethyl-silan

Die Lösung des (1,1-Biphenyl-4-yl)chlor-methyl-chlormethyl-silans, die man nach obiger Vorschrift erhielt, wurde auf -70 °C gekühlt und tropfenweise mit der Suspension des 2-Thienyllithiums, die wie oben beschrieben erhalten wurde, versetzt. Nach beendeter Reaktion wurde auf Raumtemperatur erwärmen gelassen und mit Wasser versetzt. Die organische Phase wurde mit Wasser gewaschen, getrocknet und abgedampft, der Rückstand säulenchromatographisch gereinigt. Es wurden 22,5 g (43 % der Theorie) eines farblosen Öles erhalten.

1 H-NMR: 0,7 (s,3H); 3,2 (s,2H); 7,2 (m,1 H); 7,3-7,4 (m,4H), 7,5-7,7 (m,7H).

### b) (1,1-Biphenyl-4-yl)(2-thienyl)methyl(1,2,4-triazol-1-ylmethyl)silan

22,5 g (1,1-Biphenyl-4-yl)(2-thienyl)methyl-chlormethyl-silan (0,07 Mol) wurden in 100 ml Dimethylformamid gelöst und mit 7,6 g des Natriumsalzes des Triazols (0,083 Mol) 3 Tage bei Raumtemperatur gerührt. Nach beendeter Reaktion wurden 200 ml Wasser zugegeben und mehrmals mit Essigsäureethylester extrahiert. Die organische Phase wurde mit Wasser gewaschen, getrocknet und abgedampft. Der Rückstand wurde säulenchromatographisch gereinigt.

Es wurden 14,7 g (58 % der Theorie) eines leicht gelben Öles erhalten.

### Beispiel 2:

### (Dimethyl)(2-thienyl)(1,3-imidazol-1-yl)silan

### a) (Dimethyl)(2-thienyl)chlormethyl-silan

3,4 g Thiophen (0,04 Mol) wurden in 100 ml Diethylether mit 25 ml einer 1,6 molaren Butyllithiumlösung in Hexan (0,04 Mol) auf Rückfluß erhitzt. Die Reaktionslösung wurde anschließend auf -70 C gekühlt und eine Lösung von 5,6 g Chlormethyl-dimethyl-chlorsilan (0,04 Mol) in 50 ml Diethylether zugetropft. Anschließend wurde auf Raumtemperatur erwärmen gelassen, die organische Phase 2 Mal mit Wasser extrahiert und über Natriumsulfat getrocknet. Das Lösungsmittel wurde abgedampft und der Rückstand einer Vakuumdestillation unterworfen (Kp: 72-73 °C, 5 Torr).

Es wurden 4,4 g eines farblosen Öles (58 % der Theorie) erhalten.

### b) (Dimethyl)(2-thienyl)(1.3-imidazol-1-yl)silan

2,2g Dimethyl(2-thienyl)chlormethyl-silan (0,011 Mol) wurden in 5 ml Dimethylformamid gelöst und mit 1,0 g (0,011 Mol) des Na-Salzes des Imidazols 3 Tage bei Raumtemperatur gerührt. Anschließend wurde Wasser zugesetzt und mit Essigsäureethylester mehrmals extrahiert. Die organische Phase wurde mit Wasser gewaschen, über Natriumsulfat getrocknet und abgedampft, der Rückstand säulenchromatographisch gereinigt. Es wurden 0,8 g (31 % der Theorie) eines braunen Öles erhalten.

Nach der obigen Verfahrensweise wurden, unter Verwendung entsprechender Ausgangsstoffe, die in der Tabelle angeführten Verbindungen 3 bis 18 hergestellt.

Der Thienylrest in den Verbindungen 3 bis 15 ist in 2-Stellung an das Silizium gebunden, in den Verbindungen 16, 17 und 18 in 3-Stellung.

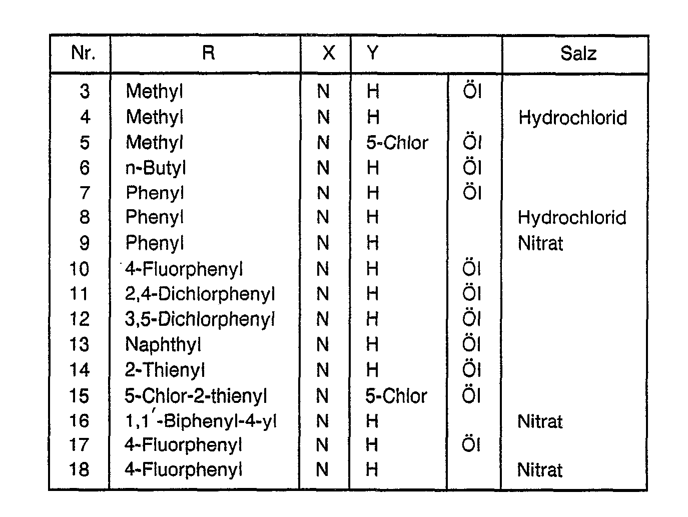

### Physikalische Daten der neuen Verbindungen

Verbindung 1 0.8(s,3H)/4.2(s,2H)/7.2-7.6(m,1 H)/7.7(d,1 H,Thiophen)/7.8(s,1 H);7.9(s,1 H) Triazol
Verbindung 2 0.4(s,6H)/3,8(s,2H)/6.7(s,1H);7.0(s,1 H);7.2(s,1 H) Imidazol/7.2-7.3(m,2H);7.6(m,1H) Thiophen
Verbindung 3 0.4(s,6H)/3.8(s,2H)/7.2(m,1H);7.3(d,1H);7.6(d,1H) Thiophen/7.8 (s,1 H);7.9(s,1H) Triazol
Verbindung 4 0.4 (s,6H)/4.2(s,2H)/7.1(m,1H);7.25(m,1H);7.6(m,1 H) Thiophen/8.2(s,1 H);10.5 (s breit, 1 H) Triazol
Verbindung 5 0.4 (s,6H)/3.9(s,2H)/6.9(d,1 H);7.0(d,1H) Thiophen/7.8(s,1H);7.9(s,1H) Triazol
Verbindung 6 0.4 (s,3H)/0.8-0.9(m,SH)/1.2-1.3(m,4H)/3.9(d,2H)/7.1-7.2(m,2H);7.6(d,1H) Thiophen/7.7(s,1H);7:8(s,1H) Triazol
Verbindung 7 0.8 (S,3H); 4.2 (s, 2H); 7.3-7.6 (m,7H); 7.7 (d,1 H); 7.8 (s,1 H) 7.9 (s,1 H) Triazol
Verbindung 8 0.8 (s,3H); 4.4 (s,2H); 6.9-7.7 (m,7H); 7.7 (d,1 H); 8,3 (s,1H); 9.0 (s,1 H); Triazol
Verbindung 9 0.8 (s,3H); 4.6 (m,2H); 7.2 (m,1H); 7.3-7.4 (m,4H); 7.5 (m,2H); 7.6 (d,1H); 8.2 (s,1H); 10.3 (s,1 H) Triazol
Verbindung 10 0.8(s,3H)/4.2(s,2H)/7.0-7.1(m,2H);7.4-7.6(m,2H) Phenylprotonen/7.2-7.3(m,1H);7.3(d,1H);7.7(d,1H) Thiophen 7.8(s,1 H);7.9(s,1H)Triazol
Verbindung 11 0.8(s,3H),4.3(m,2H)/7.2-7.3(m,3H)/7.3(2d,2H)/7.7.(d,1H)/7.8(s,2H) Triazol
Verbindung 12 0.8(s,3H)/4.2(s,2H)/7.2-7.3(m,2H)/7.3(m,1 H)/7.4(d,1 H)/7.45(d,1 H)/7.7(d,1 H)/7.8(s,1 H);7.9(s,1 H) Triazol
Verbindung 13 0.8 (S,3H); 4.2 (s,2H); 7.1-8.0 (m,12H)
Verbindung 14 0.8(s,3H)/4.2(s,2H)/7.2(m,2H);7.4(d,2H);7.7(d,2H) Thiophen/7.8(s,1 H);7.9(s,1H) Triazol
Verbindung 15 0.8(s,3H)/4.2(s,2H)/7.0(m,2H);7.1 (m,2H) Thiophen/ 7.9 (d breit,2H) Triazol
Verbindung 16 0.8 (s,3H); 4.6 (s, 2H); 7.3-7.4 (m, 4H); 7.4-7.6 (m,6H); 7.9-8.0 (m,2H); 8.4 (s,1 H); 8.9 (s,1 H); Triazol
Verbindung 17 0.8 (s,3H); 4.3 (d,2H); 7.1-7.3 (m,3H); 7.5-7.6 (m,4H); 7.9 (m,1H); 8.0 (m,1H) Triazol
Verbindung 18 Fp. 141 - 150 C

### Beispiel 19:

Spritzpulver
20 % Wirkstoff der Verbindung 16
50 % Kaolin
20 % Wessalon "SV"
10 % Arkopon T^{R}

Der Wirkstoff wurde in einem Mischer mit den Zuschlagsstoffen innig vermischt und anschließend über Walzen und Mühlen vermahlen, wodurch ein Spritzpulver von vorzüglicher Benetzbarkeit erhalten wurde, das mit Wasser zu Suspensionen jeder gewünschten Konzentration verdünnbar ist.

### Beispiel 20:

Emulgierbares Konzentrat
10 % Wirkstoff der Verbindung 1
25 % 4-Butyrolacton
55 % Xylol
10 % Atlox 3335-B

Aus diesem Konzentraten können mit Wasser Emulsionen jeder gewünschten Konzentration hergestellt werden.

### Beispiel A

### In vitro Prüfungen

Abgekühlte Nährböden wurden mit einer wässrigen Suspension von Hyphenteilen und/oder Konidiosporen der jeweiligen Testpilze beimpft. Filterplättchen (Durchmesser: 5 mm) wurden in wäßrigen 0.001 bis 0.2%igen Dispersionen der Wirkstofformulierungen getränkt und auf die beimpften Nährböden gelegt.

Zur Beurteilung wurde die minimale Hemmkonzentration (MHK) herangezogen. Das ist jene Konzentration des Wirkstoffes in der Dispersion, die ein Wachstum des Pilzes vollständig verhindert.

Als Standards wurden A: Propiconazol (1-(2-(2,4-Dichlorphenyl)-4-propyl-1,3-dioxoian-2-ylmethyl)-1H-1,2,4-triazol) und B: Thiabendazol (2-(4-Thiazolyl)-benzimidazol) verwendet.

### Ergebnisse:

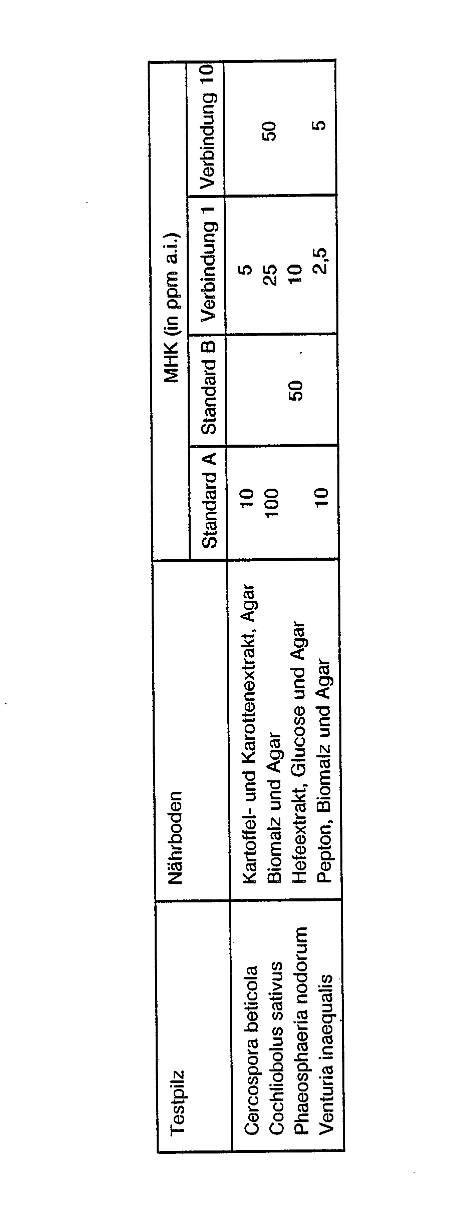

### Beispiel B

### Protektive Wirkung der Verbindung gegen Echten Mehltau (Erysiphe cichoracearum) auf Gurken

10 Tage alte Gurkenpflanzen wurden mit einer wäßrigen Verdünnung des formulierten Wirkstoffes besprüht.

Nach dem Antrocknen der Spritzflüssigkeit wurden die Pflanzen mit Konidiosporen von befallenen Gurkenpflanzen inokuliert. Die behandelten Pflanzen blieben anschließend im Gewächshaus unter gegebenen Bedingungen stehen.

14 Tage nach der künstlichen Infektion wurde der Befall mit Erysiphe cichoracearum ausgewertet.

Dabei konnten beispielsweise die Verbindungen 1 und 10 in einer Wirkstoffkonzentration von 10 ppm den Ausbruch der Krankheit vollständig verhindern.

### Beispiel C

### Protektive Wirkung der Verbindungen gegen Getreidemehltau (Erysiphe graminis) auf Weizen und Gerste

Gersten- und Weizenpflanzen im frühen 2-Blattstadium wurden mit einer wässrigen Verdünnung des formulierten Wirkstoffes bis zur Tropfnässe besprüht. Nach dem Antrocknen der Spritzflüssigkeit wurden die Pflanzen mit Konidiosporen von befallenen Pflanzen inokuliert. Die behandelten Pflanzen blieben anschließend im Gewächshaus unter gegebenen Bedingungen stehen.

8 bis 10 Tage nach der künstlichen Infektion wurde der Befall mit Erysiphe graminis ausgewertet.

Dabei konnten beispielsweise die Verbindungen 1 und 10 in einer Wirkstoffkonzentration von 10 bis 50 ppm den Ausbruch der Krankheit vollständig verhindern.

### Beispiel D

### Protektive Wirkung der Verbindungen gegen Weizenbraunrost (Puccinia recondita) an Weizen

Weizenpflanzen im frühen 2-Blattstadium wurden mit einer wässrigen Verdünnung des formulierten Wirkstoffes bis zur Tropfnässe besprüht. Nach dem Antrocknen der Spritzflüssigkeit erfolgte die Inokulation mit von infizierten Pflanzen gewonnenen Uredosporen. Anschließend wurden die Testpflanzen für 24 Stunden bei 20 C und ca. 95 % Luftfeuchtigkeit in einem Klimaraum inkubiert. Bis zum vollen Krankheitsausbruch auf den Kontrollpflanzen standen die Testpflanzen unter gegebenen Bedingungen im Gewächshaus.

Jn dieser Prüfung verhinderten beispielsweise die Verbindungen 1 und 10 in einer Konzentration von 50 ppm vollständig den Befall der Testpflanzen.

### Beispiel E

### Protektive Wirkung der Verbindungen gegen Haferkronenrost (Puccinia coronata) an Hafer

Haferpflanzen im frühen 2-Blattstadium wurden mit einer wäßrigen Verdünnung des formulierten Wirkstoffes bis zur Tropfnässe besprüht. Nach dem Antrocknen der Spritzflüssigkeit erfolgte die Inokulation mit von infizierten Pflanzen gewonnenen Uredosporen. Anschließend wurden die Testpflanzen für 24 Stunden bei 20 ° C und ca. 95 % Luftfeuchtigkeit in einem Klimaraum inkubiert.

Bis zum vollen Krankheitsausbruch auf den Kontrollpflanzen standen die Testpflanzen unter gegebenen Bedingungen im Gewächshaus.

In dieser Prüfung verhinderten beispielsweise die Verbindungen 1 und 10 in einer Konzentration von 50

ppm in ausreichendem Maß den Befall der Pflanzen.

### Beispiel F

### Protektive Wirkung der Verbindungen gegen Weizenblattdürre (Phaeosphaeria nodorum) an Weizen

Weizenpflanzen im frühen 2-Blattstadium wurden mit einer wäßrigen Verdünnung des formulierten Wirkstoffes bis zur Tropfnässe besprüht. Nach dem Antrockenen der Spritzflüssigkeit erfolgte die Inokulation mit einer wäßrigen Suspension von Pyknidiosporen von Phaeosphaeria nodorum.

Anschließend wurden die Testpflanzen für 36 bis 48 Stunden bei 20 ° C und ca. 95 % Luftfeuchtigkeit in

einem Klimaraum inkubiert.

Bis zum vollen Krankheitsausbruch auf den Kontrollpflanzen. standen die Testpflanzen unter gegebenen Bedingungen im Gewächshaus.

In dieser Prüfung verhinderten beispielsweise die Verbindungen 1 und 10 in einer Konzentration von 200

ppm a. i. vollständig oder im ausreichenden Maß einen Befall der Pflanzen.

### Beispiel G

### Protektive Wirkung der Verbindungen gegen Falschen Rebenmehltau (Plasmopara viticola) an Wein

2 Monate alte Weinstecklinge wurden mit einer wäßrigen Verdünnung des formulierten Wirkstoffes bis zur Tropfnässe besprüht. Nach dem Antrocknen der Spritzflüssigkeit erfolgte die Inokulation mit einer wäßrigen Sporangiosporen-Suspension von Plasmopära viticola. Anschließend wurden die Testpflanzen 24 Stunden bei 20 °C und ca. 95 % Luftfeuchtigkeit in einem Klimaraum inkubiert. Bis zum vollen Krankheitsausbruch auf den Kontrollpflanzen standen die Testpflanzen unter gegebenen Bedingungen im Gewächshaus.

In dieser Prüfung verhinderte beispielsweise die Verbindung 1 in einer Konzentration von 200 ppm a. i. vollständig einen Befall der Testpflanzen.

## Patentansprüche

1. Thienyl-azolylmethyl-silane der allgemeinen Formel I des Formelblattes in der X ein Stickstoffatom oder eine CH-Gruppe, Y ein Wasserstoff- oder Halogenatom und R einen geradkettigen oder verzweigten Alkylrest mit 1 bis 6 C-Atomen, einen unsubstituierten, ein- oder mehrfach durch Halogen substituierten Phenyl- oder Thienylrest, einen Biphenylyl- oder Naphthylrest bedeutet sowie deren pflanzenphysiologisch verträglichen Säureadditionssalze.

2. (1,1-Biphenyl-4-yl)(2-thienyl)methyl(1,2,4-triazol-1-ylmethyl)silan

3. (4-Fluorphenyl)(2-thienyl)methyl(1,2,4-triazol-1-ylmethyl)silan

4. Verfahren zur Herstellung von Thienyl-azolylmethyl-silanen der allgemeinen Formel I des Formelblattes in der X ein Stickstoffatom oder eine CH-Gruppe, Y ein Wasserstoff-oder ein Halogenatom und R einen geradkettigen oder verzweigten Alkylrest mit 1 bis 6 C-Atomen, einen unsubstituierten, ein- oder mehrfach durch Halogen substituierten Phenyl- oder Thienylrest, einen Biphenylyl- oder Naphthylrest bedeutet, dadurch gekennzeichnet, daß man
a) eine Verbindung der allgemeinen Formel 11 des Formelblattes in der R die oben angegebene Bedeutung hat mit einer Verbindung der allgemeinen Formel III des Formelblattes in der Y die obgenannte Bedeutung hat und M Li, Na oder MgBr bedeutet, reagieren läßt und
b) das gebildete Reaktionsprodukt der allgemeinen Formel IV des Formelblattes mit einem Natriumsalz von Imidazol oder Triazol unter Abspaltung von NaCI zu einer Verbindung der allgemeinen Formel umsetzt.

5. Verfahren nach Anspruch 4, dadurch gekennzeichnet, daß man die Verbindung der allgemeinen Formel 11 des Formelblattes, in der R die obgenannte Bedeutung hat, durch Reaktion von Chlormethyldichlor-methylsilan mit RLi oder RMgBr herstellt und ohne sie zu isolieren in der Reaktionsstufe a) einsetzt.

6. Fungizide Mittel, gekennzeichnet durch einen Gehalt an mindestens einem Thienyl-azolylmethyl-silan der allgemeinen Formel I nach Anspruch 1.

7. Verfahren zur Bekämpfung von pathogenen Pilzen, dadurch gekennzeichnet, daß man Thienyl-azolylmethyl-silane der allgemeinen Formel I nach Anspruch 1 auf die Pilze oder deren Lebensraum einwirken läßt.

8. Verwendung von Thienyl-azolylmethyl-silanen der allgemeinen Formel I nach Anspruch 1 zur Bekämpfung pathogener Pilze.

9. Verfahren zur Herstellung von fungiziden Mitteln, dadurch gekennzeichnet, daß man ein Thienyl-azolylmethyl-silan der allgemeinen Formel I nach Anspruch 1 mit Streckmitteln und/oder oberflächenaktiven Mitteln vermischt.

## Patentansprüche

Geänderter Patentansprüch für folgenden Vertragsstaat: ES 1. Verfahren zur Herstellung von Thienyl-azolylmethyl-silanen der allgemeinen Formel I des Formelblattes in der X ein Stickstoffatom oder eine CH-Gruppe, Y ein Wasserstoff- oder ein Halogenatom und R einen geradkettigen oder verzweigten Alkylrest mit 1 bis 6 C-Atomen. einen unsubstituierten, ein- oder mehrfach durch Halogen substituierten Phenyl- oder Thienylrest, einen Biphenylyl- oder Naphthylrest bedeutet, dadurch gekennzeichnet, daß man
a) eine Verbindung der allgemeinen Formel II des Formelblattes in der R die oben angegebene Bedeutung hat mit einer Verbindung der allgemeinen Formel III des Formelblattes in der Y die obgenannte Bedeutung hat und M Li, Na oder MgBr bedeutet, reagieren läßt und
b) das gebildete Reaktionsprodukt der allgemeinen Formel IV des Formelblattes mit einem Natriumsalz von Imidazol oder Triazol unter Abspaltung von NaCI zu einer Verbindung der allgemeinen Formel I umsetzt.

2. Verfahren nach Anspruch 1, dadurch gekennzeichnet, daß man die Verbindungen der allgemeinen Formel 1 durch Zusetzen einer Säure gegebenenfalls in einem Lösungsmittel in die pflanzenphysiologisch verträglichen Säureadditionssalze überführt.

3. Verfahren nach Anspruch 1, dadurch gekennzeichnet, daß man eine Verbindung der allgemeinen Formel II, in der R einen 1,1-Biphenyl-4-yl-rest bedeutet und das Natriumsalz von Triazol einsetzt.

4. Verfahren nach Anspruch 1, dadurch gekennzeichnet, daß man eine Verbindung der allgemeinen Formel II in der R einen 4-Fluorphenylrest bedeutet und das Natriumsalz von triazol einsetzt.

5. Verfahren nach Anspruch 1, dadurch gekennzeichnet, daß man die Verbindung der allgemeinen Formel II des Formelblattes, in der R die obgenannte Bedeutung hat, durch Reaktion von Chlormethyldichlor-methylsilan mit RLi oder RMgBr herstellt und ohne sie zu isolieren in der Reaktionsstufe a) einsetzt.

6. Fungizide Mischung, enthaltend mindestens ein Thienyl-azolylmethyl-silan der allgemeinen Formel I nach Anspruch 1 in einer Menge von 0,1 bis 95 Gew.% neben üblichen Träger- und/oder Hilfsstoffen.

7. Verfahren zur Herstellung fungizider Mischungen, dadurch gekennzeichnet, daß man mindestens ein Thienyl-azolylmethyl-silan der allgemeinen Formel I nach Anspruch 1 mit üblichen Träger- und/oder Hilfsstoffen vermischt.

8. Verfahren zur Bekämpfung pflanzenschädigender Pilze, dadurch gekennzeichnet, daß man auf die Pilze oder deren Lebensraum 0,015 bis 1 kg pro Hektar einer fungiziden Mischung nach Anspruch 6 aufbringt. Formelblatt
